# EUROPEAN PATENT APPLICATION

(11) **EP 2 204 679 A2**
(43) Date of publication of application: **07.07.2010**
(21) Application number: 09382306.0
(22) Date of filing: 28.12.2009
(51) Int. Cl.: G02B 6/125

(54) **Integrated photonic guide crossing structure**

(30) Priority: 30.12.2008 ES 200803762
(71) Applicant: Das Photonics, S.L., 46022 Valencia (ES)
(72) Inventor: Villalba Villalba, Pablo, 46022 Valencia (ES); Cuesta Soto, Francisco, 46022 Valencia (ES); Hakansson, Andreas, 46022 Valencia (ES)
(74) Representative: Carpintero Lopez, Francisco

(57) **Abstract**

The invention has an integrated photonic guide (2) crossing structure that achieves minimum insertion losses and signal crosstalk. The design of this crossing is such that the guides (2), before crossing and up to the moment of crossing (5) start to increase and decrease the derivative of their width more than once, finally decreasing it at the moment of crossing (5).

## Description

### FIELD OF THE INVENTION

The present invention is applicable to the field of telecommunications and particularly to the design of integrated photonic circuits, extending its application to those industrial sectors that make use of optical technologies with different applications in fields such as medicine, space communications, military applications, etc.

### BACKGROUND OF THE INVENTION

At present, there is an ever-increasing use of optical systems for transmitting information at high speed. Additionally, in recent years there is a growing demand for compact systems with reduced dimensions suitable for different applications and which in turn are adequate, in terms of dimensions and mass, for such exclusive applications as space or military.

Within optical communications technologies, it is known that more than one wavelength can be used to transmit information. In particular, the three most frequently used wavelengths in photonics are: the so-called "first window" at 850 nm, the "second window" at 1,300 nm and the "third window" at 1,550 nm. These regions of the spectrum are used for optical fibre transmission due to the fact that they are low-attenuation zones in optical fibre, although in integrated photonic devices other wavelength values are also used.

The design of integrated nanophotonic devices suitable for different applications in reduced dimensions should also take these work bands into account and should be designed for the band of interest. In the case of simple elements, such as the crossings discussed in the present invention, it is desirable that their work bandwidth be as broad as possible, as these individual crossings from part of larger and more complex designs that could work around any of the aforementioned bands.

It should be pointed out that, at present, the main applications of photonics and therefore also of integrated photonics are designed for the third window. Due to this, the most frequently used material in integrated photonics to manufacture the guides along which optical signal travels is silicon (Si) or silicon oxide (SiO₂), due to the adecuacy of this material for said wavelength. However, other materials are also currently used, such as silicon nitride (SiN), silicon oxynitride (SiON) or gallium arsenide (GaAS, AlGaAS), among others.

The growing demand for applications for integrated photonic designs is leading to their increasingly larger dimensions and growing number of undesired intersections between their guides to make the final design possible.

The problem raised is the optimisation of the design of the optical guide crossings, in such a manner as to minimise crossing losses and also minimise the power diverted from the original guide, which is guided by the guide that it crosses. This power is also known as interference or crosstalk.

Therefore, optimisation seeks to ensure that a guide crossed by another is a similar as possible to an uncrossed guide.

Another point to be taken into account in a circuit design that includes crossings with excessively small motifs is the problem when carrying out an upper cladding process in the device in question. This manufacturing process consists of cladding the integrated circuit with a layer of material having a lower refractive index than that used by the circuit guides, in order to protect the design from external factors without altering its operability. Nonetheless, the process does not work correctly when the motifs are too small, as these cannot be filled by the deposited material, leaving air bubbles that would make the device inoperable in environments such as outer space.

A more precise study of the existing state of the art to date on integrated optical guide crossings reveals the publication of different integrated crossing designs that attempt to optimise their results by varying their widths and intersection angles or by including different small-sized motifs such as holes in the guides. A description of this last idea was published by authors Steven G. Johnson and Christina Manolatou, among others, in the magazine Optic Letters, volume 23, No. 23, 1988. The excellent results obtained had the drawback of only being valid in a narrow bandwidth and the small size of the holes implied a low capacity to repeat the results, as small variations in the manufacturing process could affect the final results to a large extent.

A simpler solution is that published by P. Sanchis and J.V. Galan, among others, in IEEE Photonics Technology Letters, volume 19, No. 20, 2007. It is based on a study of the optimum crossing angle for silicon guides 500 nm wide and 205 nm high for third window transmission. The simplicity of this last design and the possibility of carrying out a upper cladding process without problems makes it attractive for manufacturing. Nonetheless, the results obtained reveal excessively high transmission losses and crosstalk.

Finally, we can name a final type of solution published by W. Bogaerts and P. Dumon in Optics Letters, volume 32, No. 19, 2007. In this publication different design tests were conducted on crossings having a length of 6 µm across and elliptical shapes, using transmission guides 500 nm wide by 220 nm high and third window transmission. The conclusion of the earlier study can be summarised in that excellent results in terms of losses and crosstalk can only be obtained with designs requiring two-level etching-based manufacturing processes. This means that each crossing requires double the manufacturing time, as it requires a first process where the first etching of the silicon wafer is made, followed by an alignment process and a second etching of the wafer over the first. To this we must add the intermediate alignment problem that will represent, in the event of not being perfect, an error in the second etching process.

### DESCRIPTION OF THE INVENTION

The object of the invention is to provide a compact integrated photonic guide crossing design that achieves minimum insertion losses and signal crosstalk, i.e. that the difference between optical power at the entrance and exit of a guide that crosses another is minimum and that, additionally, the optical power diverted along the guide that it crosses is also minimum.

The present invention aims to solve the previously expounded problems through a compact integrated optical guide crossing design, i.e. for integrated passive photonic circuits. The design presented in the description is optimised for execution with silicon (Si) guides 500 nm wide and 250 nm high for transmission around the third window. Nonetheless, the design can be extrapolated to other guide wavelengths, size, typology or geometry and even to another type of material.

Therefore, the crossing design will be formed by two crossed guides with the previously detailed specifications. The exclusive design of the guides starts 3 µm before the exact crossing point and the complete design is also totally symmetrical seen from any of its four entrances. Therefore, the total length of the crossing for the specific case of the silicon guide that we are considering by way of example is 6 µm (3µm from the start of the design to the crossing point and another 3 µm from the crossing point to the end of the design, where it passes once again to the 500x250 nm guide). These dimensions vary in accordance with the guides used.

The design maintains the height imposed by the guides used in the integrated device at all times. With regard to the guide width, the exclusive design starts by increasing the derivative of the initial guide width and then decreases it, increasing it again afterwards and then finally decreasing it when it crosses the other guide.

Likewise, an object of the invention is to increase the operating bandwidth of the crossing, making it as independent as possible from the operating band required at a given time. In such case, a tunable optical source generated to form the incoming optical signal and which is injected with all of its spectral components into the passive optical device contained by the crossing design is used. The results reflect acceptable operability for the described design in a broad bandwidth, decreasing in performance as the optical source excites the device with wavelengths farther from the third window.

In short, the main enhancement introduced by the present invention with respect to its antecessors is a compact design that is simple to manufacture, without such small motifs as to represent a manufacturing problem with the current e-beam (Electron Beam) or DUV (Deep Ultraviolet) nano-manufacturing techniques. This allows the possibility of manufacture including upper cladding processes to protect the device, thereby increasing its commercial possibilities.

### DESCRIPTION OF THE DRAWINGS

For the purpose of complementing the preceding description and to better understand the characteristics of the invention, a set of drawings in accordance with a preferred example of practical embodiment thereof has been included as an integral part of said description, in which the following figures have been represented in an illustrative and non-limiting manner:
Fig. 1 shows a three-dimensional diagram of the guide crossing with the design described in the present invention;

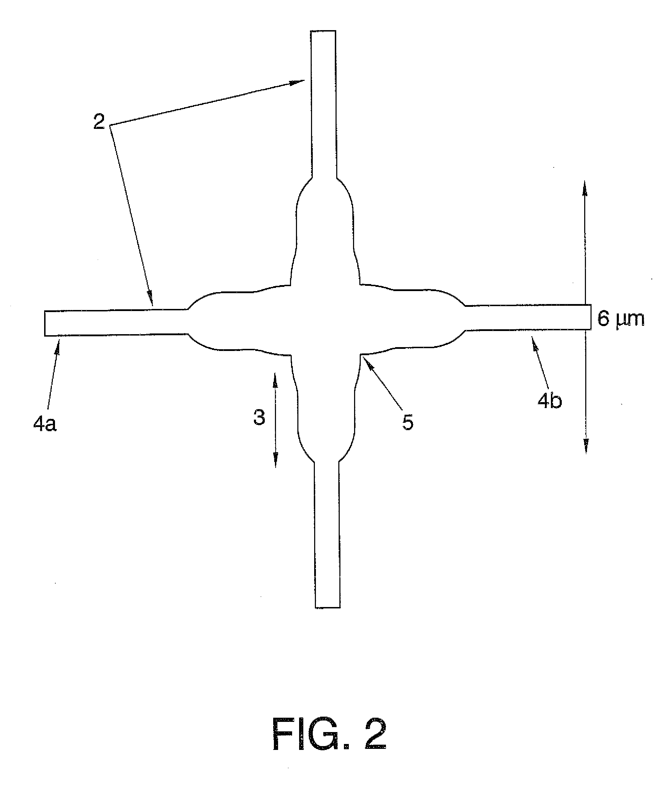

Fig. 2 shows a detailed diagram of the guide design at the moment of crossing; and

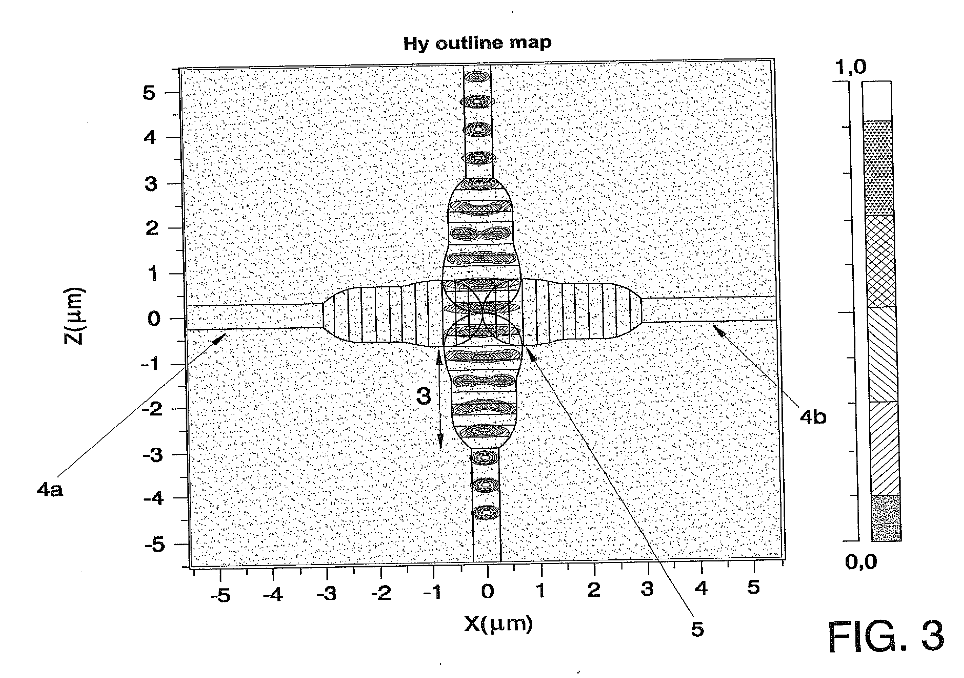

Fig. 3 shows a diagram of the crossing design simulating the propagation of the optical signal, together with an identifying scale of the optical field level throughout the propagation.

### PREFERRED EMBODIMENTS OF THE INVENTION

In view of the preceding figures, the preferred embodiments of the invention are described below.

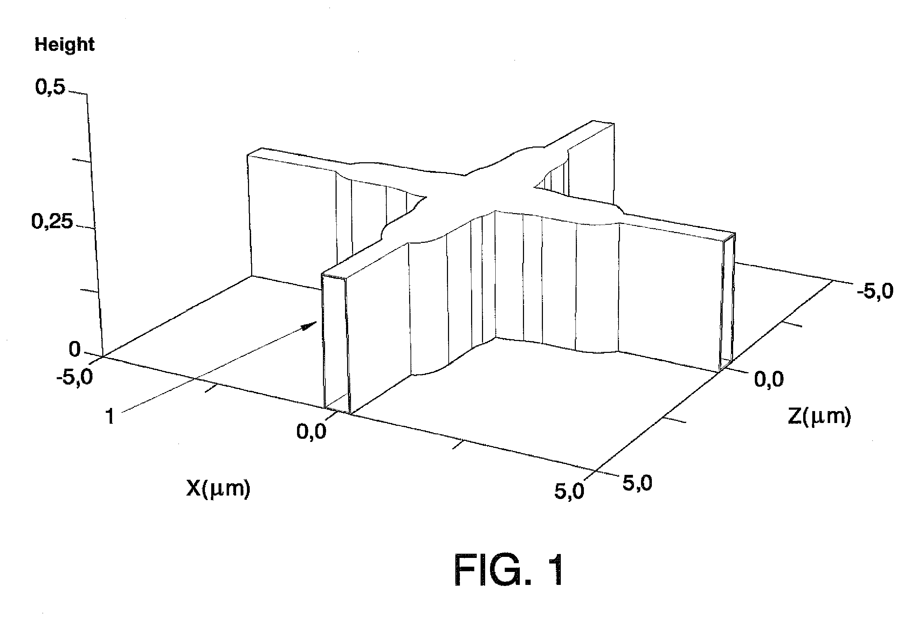

The complete design 1 of the crossing shown in Figure 1 will possibly form part of a greater circuit with the applications that correspond in each case. Said design, which includes the crossing that is the object of the invention, is implemented by means of optics integrated in a single substrate.

The guides 2 will preferably be rectangular and the preferred dimensions of the guides 2 that cross each other will be 500 nm in width by 250 nm in height. Nonetheless, said dimensions will depend on the type of wafer used in the manufacturing process and its constituent material.

With regard to guide width, the exclusive design 3 starts by increasing the derivative of the initial width of the guide and then decreases it, increasing it again and finally decreasing it at the moment 5 in which it crosses the other guide.

If using a fixed optical source that only emits in the third window to form the incoming optical signal, it has been verified that insignificant and therefore optimum loss and crosstalk levels are achieved with the earlier design.

In order to measure crossing losses, a power meter is required in addition to the optical source to see the difference between the optical power at the entrance of the guide minus the optical power at the exit of the guide. For its part, crosstalk measurement will also require the same optical source and power meter, in this case measuring the two exits 4a, 4b of the guide that crosses the first.

Although the preferred material for designing the guides is silicon (Si), due to its high refractive index which confers the advantage of being usable in designs of smaller dimensions, this design is also extrapolable to other types of materials typically used in the field of integrated optics, such as silicon oxide (SiO₂) silicon nitride (Si₃N₄), silicon oxynitride (SixOyN₄) or gallium arsenide (GaAs), among others.

The integration is carried out using SOI technology, i.e. in silicon over a base of silicon oxide and a silicon substrate.

Therefore, other possible designs for the crossing that is the object of the invention will be those implemented with guides of a material other than silicon, which will entail the corresponding change in the dimensions of the previously detailed design and illustrated by the attached figures.

The terms used to prepare this specification must always be considered in their broadest and non-limiting sense.

The invention has been described based on this text and set of figures for some preferred embodiments thereof, but a person skilled in the art will be able to understand that multiple variations can be introduced into said embodiments and combined in different manners, giving rise to more possible variants, without exceeding the scope defined by the following claims.

## Claims

1. Integrated photonic guide (2) crossing structure, **characterised in that** said guides (2) before crossing and up to the moment of crossing (5), start to increase and decrease the derivative of their width more than once, finally decreasing it at the moment of crossing (5), in order to decrease crosstalk with this design and optical power losses on going through the crossing.

2. Integrated photonic guide crossing structure, according to claim 1, **characterised in that** the angle between the crossing guides (2) is 90°, said crossing being symmetrical at any of its entrances/exits.

3. Integrated photonic guide crossing structure, according to claim 1 or 2, **characterised in that** its integration is carried out using SOI technology, i.e. in silicon over a base of silicon oxide and a silicon substrate, and **in that** nanometer-sized dimensions are used in the width and height of the photonic guides.

4. Integrated photonic guide crossing structure, according to claim 3, **characterised in that** the photonic guides (2) are rectangular.

5. Integrated photonic guide crossing structure, according to claim 4, **characterised in that** the width of the guides (2) is 500 nanometers and the height of the guides is 250 nanometers.

6. Integrated photonic guide crossing structure, according to claim 1 or 2, **characterised in that** its integration has been carried out using a material other than silicon and **in that** nanometer or micrometer-sized dimensions are used in the width and height of the photonic guides.

7. Integrated photonic guide crossing structure, according to claim 6, **characterised in that** the photonic guides (2) are rectangular.

8. Integrated photonic guide crossing structure, according to claims 6 or 7, **characterised in that** its integration has been carried out using one of the following materials:
- silicon oxide,
- silicon nitride,
- silicon oxynitride or
- gallium arsenide (GaAs).
